# EUROPÄISCHE PATENTANMELDUNG

(11) **EP 1 501 096 A2**
(43) Veröffentlichungstag der Anmeldung: **26.01.2005**
(21) Anmeldenummer: 04016089.7
(22) Anmeldetag: 08.07.2004
(51) Int. Cl.: G11B 33/04

(54) **Umschlag für den Versand von Datenträgern**

(30) Priorität: 11.07.2003 DE 20310755 U
(71) Anmelder: Curtis 1000 Europe AG, 56564 Neuwied (DE)
(72) Erfinder: Hafner, Ingo, 56075 Koblenz (DE)
(74) Vertreter: Wolff, Felix, Dr.

(57) **Zusammenfassung**

Die Erfindung bezieht sich auf einen Umschlag (2) für den postalischen Versand von insbesondere kreisförmigen Datenträgern wie CD's und DVD's, gebildet aus einem blattartigen Zuschnitt (1) aus einem undurchsichtigen Werkstoff mit einem Vorderteil (3), einem Rückenteil (6), einer mit dem Rückenteil (6) verklebbaren Verschlussklappe (7) und gegebenenfalls mit mindestens einer sich an das Vorderteil (3) oder das Rückenteil (6) anschließenden Seitenlasche (4, 5), die durch Faltung und Klebung über seitliche Klebestreifen (8, 9) zu dem Umschlag (2) geformt sind.

Damit ein solcher Umschlag auch für den Versand von Massensendungen, beispielsweise als Infobrief oder Warensendung, zu einem besonders günstigen Tarif bzw. Porto durch die Deutsche Post verwendet werden kann, ist das Rückenteil (6) zumindest in einem Seitenbereich über eine Teillänge eines Klebestreifens (8, 9) direkt oder über die Seitenlasche (4, 5) flächig mit dem Vorderteil (3) zur Bildung einer mindestens einen Datenträger (CD) mit geringem seitlichem Spiel aufnehmenden Tasche (10) verklebt.

## Beschreibung

Die Erfindung bezieht sich auf einen Umschlag für den postalischen Versand von insbesondere kreisförmigen Datenträgern wie CD's und DVD's, gebildet aus einem blattartigen Zuschnitt aus einem undurchsichtigen Werkstoff mit einem Vorderteil, einem Rückenteil (6), einer mit dem Rückenteil (6) verklebbaren Verschlussklappe (7) und gegebenenfalls mit mindestens einer sich an das Vorderteil (3) oder das Rückenteil (6) anschließenden Seitenlasche (4, 5), die durch Faltung und Klebung über seitliche Klebestreifen (8, 9) zu dem Umschlag (2) geformt sind.

Es ist bekannt, kreisförmige Datenträger in besondere Hüllen einzustecken und diese Hüllen dann in Briefumschlägen per Post zu versenden. Dabei fällt, insbesondere aufgrund des Gewichtes, ein verhältnismäßig hohes Porto an, was dazu führt, dass solche Datenträger aus Kostengründen nie als Massensendungen - dazu gehören Infobriefe und Warensendungen - zu einem ermäßigten Porto verschickt werden können. Sogenannte Updates, Firmeninformationen und Geschäftsberichte werden daher niemals als Massensendungen versandt. Bei Massensendungen, die eine hohe Stückzahl erforderlich machen und deren Umschläge von der Deutschen Post zertifiziert sein müssen, kommt hinzu, dass die einzelnen Stücke der Massensendung ein von der Deutschen Post vorgegebenes Längen-Höhenverhältnis aufweisen müssen, wobei die Länge immer mindestens das 1,41-fache der Höhe betragen muss. Dies bedeutet, dass sich in einem diesem Längen-/Höhenverhältnis entsprechenden Briefumschlag immer seitlich des kreisförmigen Datenträgers ein Freiraum befindet, der zu einem Umknicken des Briefumschlages führen kann. Die Post verlangt aber, dass die zu versendenden kreisförmigen Datenträger so verpackt sein müssen, dass die dieselben enthaltenden Briefumschläge ohne Probleme Sortieranlagen durchlaufen können, ohne dass dabei Störungen im Sortierbetrieb auftreten. Dies ist mit den auf dem Markt befindlichen Briefumschlägen nicht sichergestellt. Ein Briefumschlag, bei dem ein solches Umknicken jedoch nicht auszuschließen ist, wird von der Deutschen Post nicht für die Einlieferung von Massensendungen zu einem ermäßigten Tarif zugelassen.

Der Erfindung liegt deshalb die Aufgabe zugrunde, einen Umschlag für den postalischen Versand von insbesondere kreisförmigen Datenträgern wie CD's und DVD's, zu schaffen, der es ermöglicht, dass diese Waren auch als Massensendungen, beispielsweise als Infobrief oder Warensendung, zu einem besonders günstigen Tarif bzw. Porto durch die Deutsche Post versandt werden können.

Zur Lösung dieser Aufgabe wird gemäß der Erfindung bei einem Umschlag der eingangs beschriebenen Gattung vorgeschlagen, dass das Rückenteil zumindest in einem Seitenbereich über eine Teillänge eines Klebestreifens direkt oder über die Seitenlasche flächig mit dem Vorderteil zur Bildung einer mindestens einen Datenträger mit geringem seitlichem Spiel aufnehmenden Tasche verklebt ist.

Ein derart ausgestalteter und geklebter Umschlag stellt sicher, dass ein darin eingesteckter kreisförmiger Datenträger keine nennenswerte Bewegungsfreiheit hat und somit seine eingetütete Lage beibehält. In seinem verklebten Seitenbereich weist der Umschlag durch die Verklebung eine erhöhte Stabilität auf, so dass dort ein Umknicken ausgeschlossen ist. Damit erfüllt ein solcher Umschlag die von der Deutschen Post vorgegebenen Kriterien für eine maschinelle Sortierung und damit für eine Einlieferung als Massensendung. Das vorgegebene Längen/Höhenverhältnis wird bei diesem Umschlag ebenfalls eingehalten.

Der Umschlag kann aus Papier oder einem papierähnlichen Werkstoff gebildet sein. Zu einer Erhöhung der Stabilität eines erfindungsgemäßen Umschlages trägt auch bei, wenn der Zuschnitt des Umschlages aus einer faserigen, aus auf einer Fläche aufgespritzten und unter Druck und Temperatur verformten Olefinfäden bestehenden, strukturierten Kunststofffolie oder aus einer Folie aus einem Polyethylen-Spinnvlies gebildet ist.

Für die erfindungsgemäße Verklebung eines Teils des Rückenteiles und/oder mindestens einer Seitenlasche mit dem Vorderteil ist es ausreichend, wenn zumindest eine Seitenlasche mindestens über einen Teil ihrer Länge schmäler als der Klebestreifen auf dem Rückenteil ausgebildet ist oder die Seitenlasche mindestens zwei gegenüber dem Klebestreifen des Rückenteiles zurückgesetzte Aussparungen aufweist. Dabei kann die Verklebung auch an beiden Seiten des Umschlages vorgesehen sein. Bedarfsweise kann sich die Verschlussklappe annähernd über die gesamte Höhe des Umschlages erstrecken.

Beispielsweise bei der Versendung von kreisförmigen Datenträgern, die vom Empfänger nach einer vorgegebenen Zeit zurückgesandt werden müssen, ist es vorteilhaft, wenn sich die Verschlussklappe annähernd über die gesamte Höhe des Umschlages erstreckt. Hier kann dann die Verschlussklappe an ihrer dem Rückenteil zugewandten Fläche sowohl in ihrem oberen als auch in ihrem unteren Bereich einen mit einem Deckstreifen versehenen Adhäsions-Klebestreifen aufweisen und unterhalb des oberen Adhäsions-Klebestreifens kann eine Abtrennperforation vorgesehen sein. Der Empfänger hat dadurch die Möglichkeit, den Umschlag, in dem er den kreisförmigen Datenträger erhalten hat, auch für dessen Rücksendung zu verwenden. Dazu ist lediglich der Teil des Rückenteiles unterhalb der Abtrennperforation zu entfernen. Ein solcher Umschlag schafft die Möglichkeit, das Rückenteil und/oder die Verschlussklappe jeweils an ihrer Außenseite mit einem Anschriftenfeld und/oder mit einem Freistempelaufdruck zu versehen. Der Empfänger der Sendung spart dann bei der Rücksendung den Aufwand für das Aufbringen der Anschrift und gegebenenfalls das Frankieren.

Die Erfindung wird nachfolgend anhand in einer Zeichnung dargestellter Ausführungsbeispiele näher erläutert. Dabei zeigen:
- Fig. 1: eine Draufsicht auf einen Zuschnitt zur Bildung eines Umschlages gemäß der Erfindung,
- Fig. 2: eine aus dem Zuschnitt der Fig. 1 gebildeten Umschlag,
- Fig. 3: eine von der Fig. 1 abweichende Ausgestaltung einer Seitenlasche und
- Fig. 4: eine weitere Ausgestaltung eines Umschlages gemäß der Erfindung.

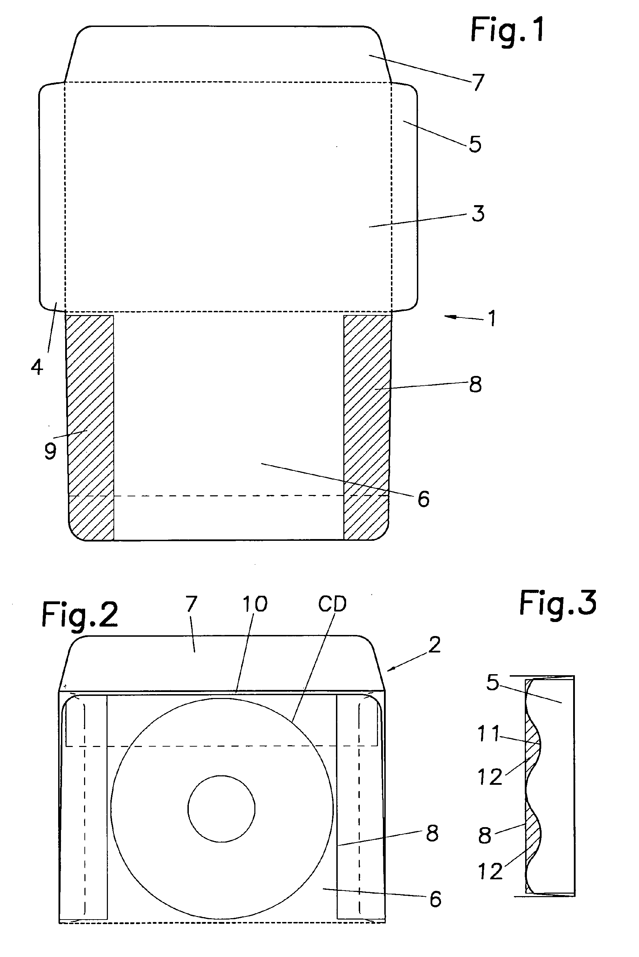

In der Fig. 1 der Zeichnung ist ein Zuschnitt 1 gezeigt, aus dem ein Umschlag 2 gemäß der Fig. 3 der Zeichnung durch Falzung und Klebung hergestellt wird. Der Umschlag 2 dient zur Aufnahme einer CD, wie dies in der Fig. 2 auch angedeutet ist. Der Zuschnitt 1 ist in vorteilhafter Weise aus einer faserigen, aus auf einer Fläche aufgespritzten und unter Druck und Temperatur verformten Olefinfäden bestehenden, strukturierten Kunststofffolie gebildet, die eine besonders hohe Stabilität und Reißfestigkeit aufweist. Dabei wird der Zuschnitt 1 - aus Fertigungsgründen - vorteilhaft von einem als Rollenware vorliegendem Band abgetrennt. Es ist jedoch auch möglich, den Zuschnitt aus einem Bogen mit rechteckiger Grundfläche herzustellen.

Der Zuschnitt 1 besitzt ein Vorderteil 3, welches an seiner in der Zeichnung nicht sichtbaren Seite eine Anschrift - beispielsweise durch Aufkleben eines Etiketts - aufnehmen und bedarfsweise auch eine Freistempelung besitzen kann. An dieses Vorderteil 3 schließen sich zwei Seitenlaschen 4, 5, ein klappbares Rückenteil 6 und eine Verschlussklappe 7 an. Auf der in Fig. 1 sichtbaren Seite - später ist dies die Innenseite - des Rückenteiles 6 befindet sich an den sich gegenüberliegenden Seitenrändern jeweils ein Klebestreifen 8, 9. Diese Klebestreifen 8,9 sind in diesem Ausführungsbeispiel einerseits breiter als die beiden Seitenlaschen 4, 5 ausgebildet und andererseits aber so breit ausgelegt, dass zwischen denselben eine klebstofffreie Fläche besteht, die in ihrer Breite geringfügig größer ist als der Durchmesser der CD.

Nachdem die beiden Seitenlaschen 4, 5 gegen das Vorderteil 3 gefaltet wurden, wird das Rückenteil 6 gegen das Vorderteil 3 und die beiden Seitenlaschen 4, 5 gefaltet und dabei sowohl mit den beiden Seitenlaschen 4, 5 als auch mit dem Vorderteil 3 verklebt. Die Verklebung mit dem Vorderteil 3 erfolgt hier allerdings nur in den Bereichen, um die die beiden Seitenlaschen 4, 5 schmäler sind als die Breite der beiden Klebestreifen 8, 9. Der übrige Teil der Klebestreifen 8, 9 verbindet sich dabei mit der Innenseite des Vorderteiles 3.

Durch die beschriebene Faltung und Klebung ist jetzt der Umschlag 2 gemäß der Fig. 2 entstanden. Dieser Umschlag 2 weist eine Tasche 10 auf, in die die bereits erwähnte CD eingesteckt werden kann. In vorteilhafter Weise kann sich die CD noch in einer zusätzlichen Schutzhülle befinden. Der Umschlag 2 besitzt beispielsweise eine Länge von 176 mm und eine Höhe von 125 mm. Darin nimmt die Tasche 10 eine Größe von 125 x 125 mm ein, so dass sich die CD nur mit geringem Spiel in der Tasche 10 befindet. Der Umschlag 10 besitzt ein Gewicht von etwa 3 Gramm. Eine CD wiegt etwa 16 Gramm und ein evtl. aufzubringendes Etikett hat ein Gewicht von max. 1 Gramm. Damit hat der mit der CD gefüllte Umschlag ein Gewicht von 20 Gramm, was ein preiswertes Versenden als sogenannter Infobrief ermöglicht.

Um nun die CD für einen Versand im Umschlag 2 zu sichern, wird die Verschlussklappe 7 geschlossen. Dazu ist entweder auf der Außenseite des Rückenteiles 6 oder auf der späteren Innenseite der Verschlussklappe 7 ein an sich bekannter Klebestreifen aufgebracht, der in der Fig. 2 nur angedeutet ist. Bei Verwendung eines Adhäsionsklebers muss dieser Klebestreifen allerdings durch einen abziehbaren Schutzstreifen abgedeckt werden.

In der Fig. 3 der Zeichnung ist nun ein Ausschnitt aus einem Umschlag 2 der Fig. 1 gezeigt, bei dem die Seiten lasche 5 einen wellenförmigen Rand 11 besitzt und maximal die Breite der Klebestreifen 8 des Rückenteiles 6 aufweist. Durch den wellenförmigen Rand 11 werden jedoch im Bereich des Randes 11 Aussparungen 12 gebildet, über die hier das Rückenteil 6 mit der Innenseite des Vorderteiles 3 durch Klebung verbunden werden kann. Selbstverständlich ist bei diesem Ausführungsbeispiel auch die andere Seitenlasche 4 so ausgebildet. In Abänderung dieses Ausführungsbeispieles kann der Rand 11 auch eine andere Kontur besitzen. Entscheidend ist hier jedoch, dass immer Aussparungen 12 vorhanden sind, die ein Verkleben des Rückenteiles 6 mit der Innenseite des Vorderteiles 3 ermöglichen.

Bei dem anhand der Figuren 1 und 2 beschriebenen Umschlag 2 ist die Bodenklappe 6 an beiden Seiten mit dem Vorderteil 3 zur Bildung der Tasche 10 verklebt. Dadurch nimmt die Tasche 10 nur einen Teilbereich der Fläche des Umschlages 2 ein. Eine solche in ihrer Fläche gegenüber dem Umschlag 2 reduzierte Tasche 10 ist auch dann erreichbar, wenn sich die Verklebung der Bodenklappe 6 mit dem Vorderteil 3 nur an einer Seite des Umschlages 2 befindet. Dies bedeutet allerdings, dass in einem solchen Fall der verklebte Streifen erheblich breiter sein muss.

Ferner ist bei dem beschriebenen Umschlag 2 das Rückenteil 6 mit dem Vorderteil 3 verklebt. Bedarfsweise kann jedoch auch mindestens eine Seitenlasche 4, 5 mit dem Vorderteil 3 verklebt sein. Eine Seitenlasche 4 oder 5 muss oder die beiden Seitenlaschen 4 und 5 müssen in einem solchen Fall allerdings so breit ausgebildet sein, dass auch tatsächlich eine Tasche 10 mit einer gegenüber dem Umschlag 2 reduzierten und einen kreisförmigen Datenträger weitgehend spielfrei aufnehmenden Fläche entsteht. Bei einer solchen Verklebung kann jedoch die Verklebung der Seitenlasche(n) 4,5 mit dem Rückenteil 6 nicht entfallen, so dass in diesem Fall ein zusätzlicher Arbeits- bzw. Verklebevorgang erforderlich ist.

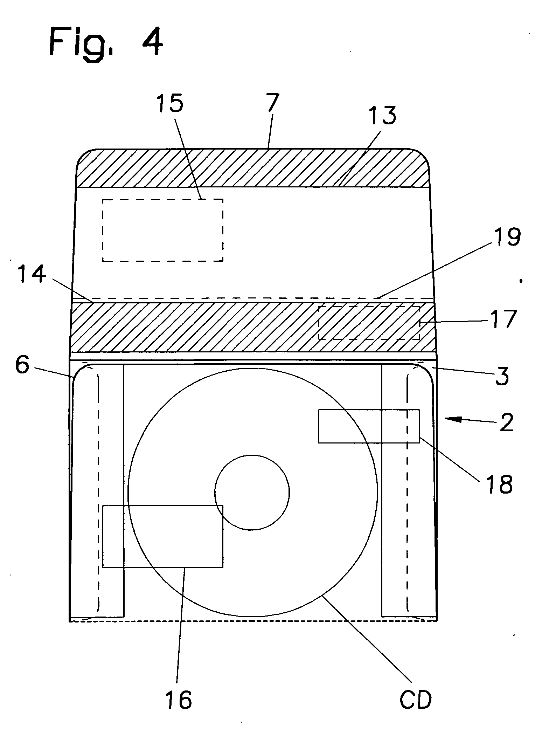

In der Fig. 4 der Zeichnung ist eine Weiterbildung des Umschlages 2 der Figuren 1 und 2 dargestellt. Diese Weiterbildung besteht darin, dass hier die Verschlussklappe 7 eine Höhe aufweist, die geringfügig kleiner als die Höhe des Umschlages 2 ist. Ein solcher Umschlag 2 kann nicht nur zur Versendung von CDs, sondern gleichzeitig auch zu deren Rücksendung verwendet werden. Die Verschlussklappe 7 besitzt bei diesem Ausführungsbeispiel einen oberen Klebestreifen 13 und einen unteren Klebestreifen 14, die sich beide auf der Innenseite der geschlossenen Verschlussklappe 7 befinden und die in vorteilhafter Weise beide durch einen Adhäsionskleber gebildet sind. Bei der Verwendung von Adhäsionskleber sind diese Klebestreifen durch einen abziehbaren Schutzstreifen abzudecken.

Ferner können sowohl auf der Außenseite der Verschlussklappe 7 als auch auf der Außenseite des Rückenteiles 6 je ein Adressfeld 15, 16 sowie ein Freistempelaufdruck 17, 18 vorgesehen sein. Zusätzlich weist die Verschlussklappe 7 eine Abtrennperforation 19 auf. Der Empfänger der Sendung hat damit die Möglichkeit, den Teil der Verschlussklappe 7, der sich unterhalb der Abtrennperforation 19 befindet, abzutrennen und die CD dann im gleichen Umschlag 2 wieder an den Absender zurückzusenden. Eine neue Anschrift für den ursprünglichen Absender muss der Empfänger dann jedoch nicht mehr eintragen. Es ist auch möglich, das Adressfeld 15, 16 und den Freistempelaufdruck 17, 18 durch ein Anschriftenetikett mit einer EDV-Freimachung zu ersetzen.

Die bei den Ausführungsbeispielen der Figuren 1 bis 4 beschriebene Tasche 10 zur Aufnahme eines kreisförmigen Datenträgers (CD) kann auch dadurch bei einem Umschlag 2, der ein für den Versand als Massensendung von der Post zugelassenes Längen-/Höhenverhältnis aufweist, erreicht werden, wenn der Zuschnitt 1 keine Seitenlaschen 4, 5 aufweist. In einem solchen Fall sind die beiden Klebestreifen 8,9 entweder auf dem Vorderteil 3 oder auf dem Rückenteil 6 angeordnet, durch die dann das Vorderteil 3 direkt mit dem Rückenteil 6 verklebt und somit die Tasche 10 für den kreisförmigen Datenträger CD gebildet ist. Auch durch eine solche Verklebung weist der Umschlag 2 in seinen verklebten Bereichen eine erhöhte Stabilität auf, so dass auch bei einem derart gebildeten Umschlag 2 ein Umknicken ausgeschlossen ist. Ferner ist auch ein Umschlag 2 denkbar, der nur eine Seitenlasche 4 oder 5 aufweist und dessen anderer Seitenbereich durch eine direkte Verklebung von Vorderteil 3 und Rückenteil 6 geschlossen ist.

## Patentansprüche

1. Umschlag (2) für den postalischen Versand von insbesondere kreisförmigen Datenträgern wie CD's und DVD's, gebildet aus einem blattartigen Zuschnitt (1) aus einem undurchsichtigen Werkstoff mit einem Vorderteil (3), einem Rückenteil (6), einer mit dem Rückenteil (6) verklebbaren Verschlussklappe (7) und gegebenenfalls mit mindestens einer sich an das Vorderteil (3) oder das Rückenteil (6) anschließenden Seitenlasche (4, 5), die durch Faltung und Klebung über seitliche Klebestreifen (8,9) zu dem Umschlag (2) geformt sind, **dadurch gekennzeichnet, dass** das Rückenteil (6) zumindest in einem Seitenbereich über eine Teillänge eines Klebestreifens (8,9) direkt oder über die Seitenlasche (4, 5) flächig mit dem Vorderteil (3) zur Bildung einer mindestens einen Datenträger (CD) mit geringem seitlichem Spiel aufnehmenden Tasche (10) verklebt ist.

2. Umschlag nach Anspruch 1, **dadurch gekennzeichnet, dass** der Zuschnitt (1) aus einer faserigen, aus auf einer Fläche aufgespritzten und unter Druck und Temperatur verformten Olefinfäden bestehenden, strukturierten Kunststofffolie gebildet ist.

3. Umschlag nach Anspruch 1, **dadurch gekennzeichnet, dass** der Zuschnitt (1) aus einem Polyethylen-Spinnvlies gebildet ist.

4. Umschlag nach Anspruch 1, **dadurch gekennzeichnet, dass** der Zuschnitt (1) aus Papier oder einem papierähnlichen Werkstoff gebildet ist.

5. Umschlag nach mindestens einem der Ansprüche 1 bis 4, **dadurch gekennzeichnet, dass** zumindest ein seitlicher Klebestreifen (8, 9) des Rückenteiles(6) zumindest über einen Teil seiner Länge nach innen über eine Seitenlasche (4, 5) hinausragt.

6. Umschlag nach mindestens einem der Ansprüche 1 bis 4, **dadurch gekennzeichnet, dass** mindestens eine Seitenlasche (4, 5) zumindest über einen Teil ihrer Länge schmäler als ein Klebestreifen (8, 9) auf dem Rückenteil (6) ausgebildet ist.

7. Umschlag nach Anspruch 5, **dadurch gekennzeichnet, dass** mindestens eine Seitenlasche (4, 5) zumindest zwei gegenüber einem Klebestreifen (8, 9) des Rückenteiles (6) zurückgesetzte Aussparungen (12) aufweist.

8. Umschlag nach mindestens einem der Ansprüche 1 bis 7, **dadurch gekennzeichnet, dass** beide Seitenlaschen (4, 5) mit dem Vorderteil (3) verklebt sind.

9. Umschlag nach mindestens einem der Ansprüche 1 bis 7, **dadurch gekennzeichnet, dass** beide seitlichen Klebestreifen (8, 9) des Rückenteiles (6) mit dem Vorderteil (3) verklebt sind.

10. Umschlag nach mindestens einem der Ansprüche 1 bis 9, **dadurch gekennzeichnet, dass** sich die Verschlussklappe (7) annähernd über die gesamte Höhe des Umschlages (2) erstreckt.

11. Umschlag nach Anspruch 10, **dadurch gekennzeichnet, dass** die Verschlussklappe (7) an ihrer dem Rückenteil (6) zugewandten Fläche sowohl in ihrem oberen als auch in ihrem unteren Bereich einen mit einem Deckstreifen versehenen Adhäsions-Klebestreifen (14, 15) aufweist und unterhalb des oberen Adhäsions-Klebestreifens (15) eine Abtrennperforation (19)vorgesehen ist.

12. Umschlag nach Anspruch 10, **dadurch gekennzeichnet, dass** das Rückenteil (6) und/oder die Verschlussklappe (7) jeweils an ihrer Außenseite mit einem Anschriftenfeld (15, 16) und/oder mit einem Freistempelaufdruck (17, 18) versehen sind.
